# EUROPEAN PATENT APPLICATION

(11) **EP 4 468 410 A1**
(43) Date of publication of application: **27.11.2024**
(21) Application number: 23860820.2
(22) Date of filing: 28.08.2023
(51) Int. Cl.: H01M 4/36, H01M 4/38, H01M 4/58, H01M 4/62, C01B 32/168, H01M 10/052, H01M 4/02

(54) **SECONDARY STRUCTURE OF CARBON NANOTUBE AND SULFUR-CARBON COMPOSITE COMPRISING SAME**

(30) Priority: 31.08.2022 KR 20220110402
(71) Applicant: LG Energy Solution, Ltd., Seoul 07335 (KR)
(72) Inventor: YANG, Seung-Bo, Daejeon 34122 (KR); JEONG, Yo-Chan, Daejeon 34122 (KR); SONG, Myeong-Jun, Daejeon 34122 (KR)
(74) Representative: Goddar, Heinz J.
(86) International application number: PCT/KR2023/012737
(87) International publication number: WO 2024/049144

(57) **Abstract**

An aspect of the present disclosure relates to a carbon composite for use in a positive electrode of a lithium-sulfur battery, comprising a secondary structure which is agglomerates of carbon nanotubes, wherein the secondary structure has a flower-like structure comprising a spherical core and at least one amorphous flake on a surface of the core.

## Description

### TECHNICAL FIELD

The present disclosure relates to a secondary structure of carbon nanotubes for use as a porous carbon material in an electrode of an electrochemical device and a method for manufacturing the same.

More particularly, the present disclosure relates to a sulfur-carbon composite in which sulfur is loaded in a secondary structure of carbon nanotubes and a lithium-sulfur battery comprising the same.

The present application claims priority to Korean Patent Application No. 10-2022-0110402 filed on August 31, 2022 in the Republic of Korea, the disclosure of which is incorporated herein by reference.

### BACKGROUND ART

A lithium-sulfur battery is a battery system using a sulfur-based material having a sulfur-sulfur (S-S) bond for a positive electrode active material and a lithium metal for a negative electrode active material. Sulfur, the main component of the positive electrode active material, is abundant in nature and can be found around the world, is non-toxic and has low atomic weight.

As secondary batteries are used in a wide range of applications including electric vehicles (EVs) and energy storage systems (ESSs), attention is drawn to lithium-sulfur batteries theoretically having higher energy storage density by weight (~2,600 Wh/kg) than lithium-ion secondary batteries having lower energy storage density by weight (~250 Wh/kg).

During discharging, lithium-sulfur batteries undergo oxidation at the negative electrode active material, lithium, by releasing electrons into lithium cation, and reduction at the positive electrode active material, the sulfur-based material, by accepting electrons. Through the reduction reaction, the sulfur-based material is converted to sulfur anion by the S-S bond accepting two electrons. The lithium cation produced by the oxidation reaction of lithium migrates to the positive electrode via an electrolyte, and bonds with the sulfur anion produced by the reduction reaction of the sulfur-based compound to form a salt. Specifically, sulfur before the discharge has a cyclic S₈ structure, and it is converted to lithium polysulfide (Li₂Sx) by the reduction reaction and is completely reduced to lithium sulfide (Li₂S).

Since sulfur used for the positive electrode active material is a poor conductor having the electrical conductivity of 5×10⁻³⁰ S/cm, in order to use sulfur as the active material, the use of conductive materials in combination with sulfur for the positive electrode material is being studied to allow electrons to move during electrochemical reaction, i.e., provide reactivity. To improve the dynamic activity of electrochemical reaction during charging/discharging of lithium-sulfur secondary batteries, there is a continued need for the technology development for sulfur-carbon composite positive electrode materials in which the positive electrode active material is loaded in the porous carbon material.

For example, materials development using carbon nanotubes (CNT) as the porous carbon material is being done. Since CNT is a high porous material, it may be possible to increase sulfur loading, but it fails to ensure sufficient ion permeation paths to manufacture electrodes, resulting in low ion diffusivity. Additionally, to develop lithium-sulfur secondary batteries with high energy density, there is a need for the development of sulfur-carbon composites to realize electrodes with low porosity.

To this end, it is necessary to ensure high specific surface area of the porous carbon material and sufficient ion diffusion paths to enhance transfer sulfur and an electrolyte solution.

### SUMMARY

### Technical Problem

The present disclosure is directed to providing a secondary structure of carbon nanotubes having a new shape with high specific surface area and sufficient ion diffusion paths in an electrode when used as a host for an active material.

The present disclosure is further directed to providing a sulfur-carbon composite in which sulfur (S₈) is an active material and the secondary structure of carbon nanotubes having the new shape is a host for the active material. Through this, the present disclosure is directed to providing the sulfur-carbon composite with enhanced dynamic activity of oxidation/reduction reaction of sulfur.

The present disclosure is further directed to providing an electrode for an electrochemical device comprising the secondary structure of carbon nanotubes having the new shape and an electrochemical device comprising the same.

More particularly, the present disclosure is further directed to providing a positive electrode for a lithium-sulfur battery comprising the sulfur-carbon composite comprising the secondary structure of carbon nanotubes as a positive electrode active material, and a lithium-sulfur battery comprising the same. The present disclosure is aimed at realizing electrodes with low porosity using the sulfur-carbon composite and through this, providing lithium-sulfur batteries with high energy density.

### Technical Solution

To solve the above-described problem, according to an aspect of the present disclosure, there is provided a secondary structure of the following embodiments.

The secondary structure of a first embodiment comprises agglomerates of carbon nanotubes, wherein the secondary structure has a flower-like structure comprising a spherical core and at least one amorphous flake on a surface of the core.

According to a second embodiment, in the first embodiment, a specific surface area of the secondary structure may be 50 m²/g to 1,000 m²/g.

According to a third embodiment, in the first or second embodiment, an average particle size (D₅₀) of the secondary structure may be 1 *µ*m to 100 *µ*m.

According to a fourth embodiment, in any one of the first to third embodiments, the secondary structure may have the flower-like structure comprising the spherical core having an average particle size (D₅₀) of 10 to 20 *µ*m and the at least one amorphous flake having an average particle size (D₅₀) of 1 to 5 *µ*m on the surface of the core.

According to a fifth embodiment, in any one of the first to fourth embodiments, a roundness of the secondary structure may be 0.5 to 0.99.

According to a sixth embodiment, in any one of the first to fifth embodiments, a total pore volume in the secondary structure may be 0.5 to 5 cm³/g.

According to a seventh embodiment, in any one of the first to sixth embodiments, the carbon nanotubes may have a diameter of 50 to 500 nm, and a length of 0.1 to 5 *µ*m.

According to an eighth embodiment, in any one of the first to seventh embodiments, a ratio of diameter and length of the carbon nanotubes may be 1:1 to 1:30.

According to another aspect of the present disclosure, there is provided a method for manufacturing a secondary structure of the following embodiments.

The method for manufacturing the secondary structure according to a ninth embodiment comprises steps of: (S10) agglomerating carbon nanotubes to obtain macro entangled carbon nanotubes; and (S20) obtaining a secondary structure having a modified structure from the macro entangled carbon nanotubes, wherein the secondary structure has a flower-like structure comprising a spherical core and at least one amorphous flake on a surface of the core.

According to a tenth embodiment, in the ninth embodiment, a specific surface area of the secondary structure may be 50 m²/g to 1,000 m²/g.

According to an eleventh embodiment, in the ninth or tenth embodiment, the (S10) step may comprise spray-drying a dispersion of the carbon nanotubes in a first dispersion medium.

According to a twelfth embodiment, in any one of the ninth to eleventh embodiments, the (S20) step may comprise spray-drying a dispersion of the macro entangled carbon nanotubes in a second dispersion medium.

According to a thirteenth embodiment, in any one of the ninth to twelfth embodiments, the first dispersion medium or the second dispersion medium may comprise at least one of water, alcohol, benzene, toluene, pyridine, acetone, tetrahydrofuran (THF) or dimethylformamide (DMF).

According to a fourteenth embodiment, in any one of the ninth to thirteenth embodiments, the method for manufacturing the secondary structure may further comprise, after the spray-drying, a carbonization step .

According to a fifteenth embodiment, in any one of the ninth to fourteenth embodiments, the carbonization may be performed at a temperature of 500°C to 1,200°C.

According to a sixteenth embodiment, in any one of the ninth to fifteenth embodiments, the method for manufacturing the secondary structure may further comprise, before the (S10) step, chopping the carbon nanotubes, wherein the (S10) step comprises obtaining the macro entangled carbon nanotubes from the chopped carbon nanotubes.

According to a seventeenth embodiment, in any one of the ninth to sixteenth embodiments, the macro entangled carbon nanotubes may have a roundness of 0.5 to 0.99.

According to an eighteenth embodiment, in any one of the ninth to seventeenth embodiments, the macro entangled carbon nanotubes may have an average particle size (D₅₀) of 20 to 200 *µ*m.

According to a nineteenth embodiment, in any one of the ninth to eighteenth embodiments, the macro entangled carbon nanotubes may have a porosity of 60 to 90 volume%.

According to a twentieth embodiment, in any one of the ninth to nineteenth embodiments, the macro entangled carbon nanotubes may have a specific surface area of 200 m²/g to 400 m²/g.

According to another aspect of the present disclosure, there is provided a sulfur-carbon composite of the following embodiments.

The sulfur-carbon composite according to a twenty first embodiment comprises the secondary structure according to any one of the first to eighth embodiments; and a sulfur containing compound loaded in at least a portion of pores of the secondary structure and an outer surface of the secondary structure.

According to a twenty second embodiment, in the twenty first embodiment, the sulfur containing compound may comprise inorganic sulfur (S₈), lithium polysulfide (Li₂Sn, 1≤n≤8), carbon sulfur polymer (C₂Sₓ)ₘ, 2.5≤x≤50, 2≤m) or a mixture thereof.

According to a twenty third embodiment, in the twenty first or twenty second embodiment, a weight ratio of the secondary structure and the sulfur containing compound may be 10:90 to 40:60.

According to another aspect of the present disclosure, there is provided an electrode of the following embodiments.

The electrode according to a twenty fourth embodiment comprises the secondary structure according to any one of the first to eighth embodiments in an electrode active material layer.

According to another aspect of the present disclosure, there is provided an electrochemical device of the following embodiments.

The electrochemical device according to a twenty fifth embodiment comprises a positive electrode, a negative electrode, a separator interposed between the positive electrode and the negative electrode and an electrolyte solution, wherein at least one of the positive electrode or the negative electrode comprises the secondary structure according to any one of the first to eighth embodiments.

### Advantageous Effects

According to an embodiment of the present disclosure, it may be possible to provide the secondary structure of carbon nanotubes having the new shape.

More particularly, it may be possible to provide the composite of the active material and the secondary structure of carbon nanotubes having high specific surface area and improved ion diffusion paths by pore structure control, exhibiting high electrochemical activity when used in the electrode.

In particular, the sulfur-carbon composite in which sulfur (S₈) is combined with the secondary structure of carbon nanotubes may provide high dynamic activity of oxidation/reduction reaction of sulfur. For example, due to the high specific surface area, the sulfur-carbon composite may increase active sites of sulfur participating in the reaction, thereby enhancing reactivity of sulfur. Additionally, the sulfur-carbon composite has large pore volume, which provides advantageous effects on high sulfur loading and sufficient ion diffusion paths.

The electrode comprising the sulfur-carbon composite as the positive electrode active material may have low porosity, thereby providing lithium-sulfur secondary batteries with high energy density.

### BRIEF DESCRIPTION OF THE DRAWINGS

The accompanying drawings illustrate exemplary embodiments of the present disclosure and together with the foregoing description, serve to provide a further understanding of the technical aspect of the present disclosure, and thus the present disclosure should not be construed as being limited to the drawings.
FIG. 1 is a scanning electron microscopy (SEM) image of a secondary structure of comparative example 1 in the present disclosure.
FIG. 2 is an SEM image of a secondary structure of example 1 in the present disclosure.
FIG. 3 is a high magnification SEM image of a sulfur-carbon composite of comparative example 2 in the present disclosure.
FIG. 4 is a low magnification SEM image of a sulfur-carbon composite of comparative example 2 in the present disclosure.
FIG. 5 is a high magnification SEM image of a sulfur-carbon composite of example 2 in the present disclosure.
FIG. 6 is a low magnification SEM image of a sulfur-carbon composite of example 2 in the present disclosure.
FIG. 7 is a graph showing a charge/discharge evaluation result of a lithium-sulfur coin cell manufactured using a positive electrode comprising each of a sulfur-carbon composite of comparative example 2 and a sulfur-carbon composite of example 2 according to an experimental example in the present disclosure.
FIG. 8 is a graph showing a life evaluation result of a lithium-sulfur coin cell manufactured using a positive electrode comprising each of a sulfur-carbon composite of comparative example 2 and a sulfur-carbon composite of example 2 according to an experimental example in the present disclosure.

### DETAILED DESCRIPTION

Hereinafter, the present disclosure will be described in detail. However, the present disclosure is not limited to the following description, and each element may be variously modified or selectively used together where necessary. Accordingly, it should be understood that the present disclosure includes all modifications, equivalents or substitutes included in the technical aspect and scope of the present disclosure.

The term "comprise" or "include" when used in this specification, specifies the presence of stated elements, but does not preclude the presence or addition of one or more other elements, unless the context clearly indicates otherwise.

Throughout the specification, "A and/or B" refers to either A or B or both.

According to an aspect of the present disclosure, there is provided a porous carbon material that may be used as a material of electrodes of electrochemical devices. Specifically, there is provided a secondary structure of carbon nanotubes having a new shape. The secondary structure has high specific surface area, and a unique pore structure. Accordingly, when the secondary structure is used in electrodes, it may be possible to realize electrodes with low porosity, thereby providing electrochemical devices with high energy density.

In particular, the secondary structure of carbon nanotubes may be used as a host for a positive electrode active material of lithium-sulfur batteries, and mixed and combined with inorganic sulfur (S₈) to provide a sulfur-carbon composite that may be used as the positive electrode active material of the lithium-sulfur batteries. However, the secondary structure of carbon nanotubes may be used as not only the host for the active material of the lithium-sulfur batteries but also a conductive additive in electrodes of electrochemical devices, and the use of the secondary structure of carbon nanotubes is not limited thereto.

According to an aspect of the present disclosure, there is provided the secondary structure of carbon nanotubes that may be used as a material of positive electrodes of lithium-sulfur batteries. Specifically, the secondary structure has a structure comprising an outer surface and a plurality of internal pores. In this instance, the secondary structure may be used as a porous carbon material for loading a sulfur containing compound as the positive electrode active material in at least one of the outer surface and/or an inner surface of the pores, but the use of the present disclosure is not limited thereto.

The secondary structure according to an aspect of the present disclosure is agglomerates of carbon nanotubes, and has a flower-like structure comprising a spherical core and at least one amorphous flake on the surface of the core.

In an embodiment of the present disclosure, the secondary structure is characterized by exhibiting high specific surface area, which increases active sites of sulfur participating in oxidation/reduction reaction when loading the sulfur containing compound which is the positive electrode active material, but the feature of the present disclosure is not limited thereto.

In an embodiment of the present disclosure, since the secondary structure is characterized by having high pore volume, which makes it easy to load the sulfur containing compound as the positive electrode active material, and ensures ion diffusion paths, but the feature of the present disclosure is not limited thereto.

As described below, the secondary structure according to an aspect of the present disclosure may be formed by agglomeration and re-dispersion of shorter carbon nanotubes than the existing carbon nanotubes, for example, carbon nanotubes having smaller length by chopping the existing carbon nanotubes, i.e., a smaller ratio of length to diameter than the existing carbon nanotubes. Accordingly, it may be possible to form a macro secondary structure having higher roundness than agglomerates of the existing carbon nanotubes having a very high ratio of length to diameter and high specific surface area. The carbon composite may have high specific surface area and sufficient ion diffusion channels by re-dispersion of the resulting macro secondary structure and shape modification of the structure into a flower-like shape.

In the present disclosure, the flower-like structure comprises the spherical core and at least one amorphous flake on the surface of the core.

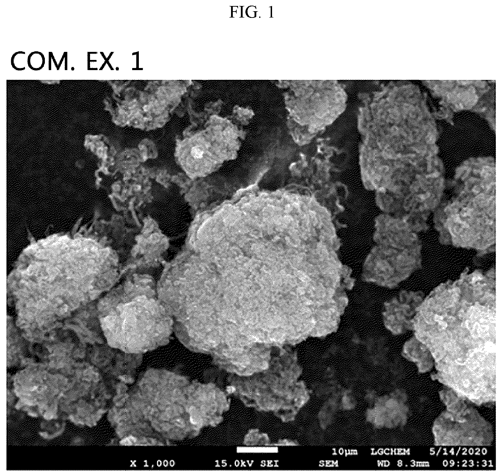

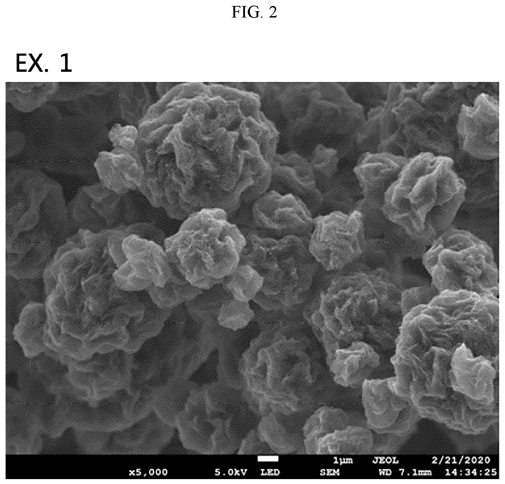

FIGS. 1 and 2 are scanning electron microscopy (SEM) images of secondary structures of carbon nanotubes having different shapes. Specifically, FIG. 1 shows a secondary structure of carbon nanotubes having a spherical shape, and FIG. 2 shows a secondary structure of carbon nanotubes having a flower-like structure comprising a spherical core and at least one amorphous flake on the surface of the core according to an embodiment of the present disclosure.

Referring to FIG. 1, it can be seen that the secondary structure is formed by agglomeration of carbon nanotubes into the spherical shape, and the spherical surface of the secondary structure is relatively smooth.

In contrast, referring to FIG. 2, it can be seen that the carbon composite has the flower-like structure comprising the spherical core and at least one platy flake on the surface of the core, and the spherical surface of the secondary structure has a plurality of concave and convex parts.

In the present disclosure, the 'spherical' in the core of the secondary structure collectively refers to not only spheres of constant radius but also quasi-spheres having partly different radii, for example, oval, ellipse, donut-like and so on.

In the present disclosure, the 'amorphous flake' on the core surface of the secondary structure collectively refers to a structure formed by spray-drying a dispersion of carbon nanotubes, followed by re-dispersion and spray-drying again as described below, wherein each flake has a grain shape that is smaller in size than the size of the core, and is formed on the core surface.

In an embodiment of the present disclosure, the secondary structure may have the following properties. When the secondary structure has the following properties, it may be possible to improve battery performance, but the present disclosure is not limited thereto.

In an embodiment of the present disclosure, the secondary structure is agglomerates of carbon nanotubes, and may exhibit high specific surface area. For example, the specific surface area of the secondary structure may be 50 m²/g to 1,000 m²/g, specifically 100 m²/g to 500 m²/g, and more specifically 150 m²/g to 200 m²/g.

In the present disclosure, the specific surface area indicates a Brunauer-Emmett-Teller (BET) specific surface area value measured by the BET method, and the BET specific surface area may be measured by the known method for measuring the BET specific surface area. For example, the BET specific surface area may be a value calculated from the adsorption amount of nitrogen gas under the liquid nitrogen temperature (77K) using BEL Japan's BELSORP-max.

In an embodiment of the present disclosure, the secondary structure, while exhibiting high specific surface area due to the agglomeration of carbon nanotubes, may be adjusted to make the particle size smaller than macro particles that are larger than 100 *µ*m, specifically 50 *µ*m in size, in order to realize electrodes with low porosity. For example, the average particle size (D₅₀) of the secondary structure may be 1 to 100 *µ*m, specifically 1 to 50 *µ*m, 5 to 50 *µ*m, 10 to 100 *µ*m, 10 to 50 *µ*m, 12 to 100 *µ*m, 12 to 50 *µ*m, and more specifically 10 to 30 *µ*m or 10 *µ*m to 20 *µ*m.

In the present disclosure, the particle size may be measured by SEM, field emission electron microscopy or a laser diffraction method. The measurement using the laser diffraction method may use, for example, a commercially available laser diffraction particle size measuring instrument (for example, Microtrac MT 3000).

In the present disclosure, the average particle size (D₅₀) refers to a particle diameter at 50% in cumulative particle size distribution.

In an embodiment of the present disclosure, the secondary structure having the flower-like structure may comprise the spherical core having the average particle size (D₅₀) of 10 to 20 *µ*m and at least one amorphous flake having the average particle size (D₅₀) of 1 to 5 *µ*m, specifically 1 to 3 *µ*m on the surface of the core. Specifically, the secondary structure may comprise the spherical core having the average particle size (D₅₀) of 10 to 20 *µ*m and a plurality of amorphous flakes having the average particle size (D₅₀) of 1 to 5 *µ*m, specifically 1 to 3 *µ*m on the surface of the core.

In this instance, the size of the spherical core may be measured using the above-described laser diffraction particle size measuring instrument, and the size of the amorphous flake indicates a longest axis length of a single flake. When the secondary structure has the above-described shape, it may be possible to improve the performance of electrodes and batteries using the same, but the present disclosure is not limited thereto.

In an embodiment of the present disclosure, the secondary structure may have, for example, roundness of 0.5 to 0.99. Specifically, the roundness of the secondary structure may be 0.6 to 0.95, and more specifically 0.7 to 0.9. The secondary structure is formed by re-dispersing macro entangled carbon nanotubes that are agglomerates of carbon nanotubes into spherical shape as described below, and maintains high roundness at the level of the macro entangled carbon nanotubes, thereby providing uniform reactivity in the electrode, but the present disclosure is not limited thereto.

In the present disclosure, the roundness of the secondary structure is calculated by measuring a short axis length and a long axis length in the whole shape of the secondary structure, and dividing the long axis length by the short axis length. In this instance, the short axis and long axis may be measured by the same method as the method of measuring the particle size. Roundness = [(long axis length of secondary structure) / (short axis length of secondary structure)]

In an embodiment of the present disclosure, the secondary structure is agglomerates of carbon nanotubes and comprises the plurality of pores in the secondary structure, and for example, the total pore volume of the secondary structure may be 0.5 to 5 cm³/g, specifically 0.5 to 3 cm³/g, and more specifically 0.8 to 2 cm³/g. When the total pore volume of the secondary structure is in the above-described range, the sulfur-carbon composite using the same may provide electrodes with high sulfur loading and high packing density, thereby providing batteries with high energy density, but the present disclosure is not limited thereto.

**In** the present disclosure, the total pore volume of the secondary structure may be, for example, measured by the BET method using nitrogen gas or Hg porosimeter and ASTM D-2873.

In an embodiment of the present disclosure, the carbon nanotubes, i.e., the primary particles that constitute the secondary structure may, for example, have the diameter of 50 to 500 nm, specifically 75 to 350 nm, and more specifically 100 to 200 nm. Since the diameter of the carbon nanotubes may be defined as a movement channel of sulfur and the electrolyte solution in the sulfur-carbon composite, when the carbon nanotubes has the above-described range of diameters, it may be possible to improve sulfur loading and material transport in the electrolyte solution, but the present disclosure is not limited thereto.

In the present disclosure, unless the context clearly indicates otherwise, the diameter of the carbon nanotubes may be measured using transmission electron microscopy (TEM), and the length of the carbon nanotubes may be measured using SEM, but the measuring method is not limited thereto.

In an embodiment of the present disclosure, the length of the carbon nanotubes may be, for example, 0.1 to 5 *µ*m, specifically 0.2 to 4 *µ*m, and more specifically 0.3 to 3 *µ*m. Not only the diameter of the carbon nanotubes but also the length may affect the access of a material into the secondary structure, and the length of the carbon nanotubes may affect the appearance of the secondary structure. Specifically, when the length of the carbon nanotubes is in the above-described range, it may be possible to increase the roundness and porosity of the finally formed secondary structure, and ensure sufficient movement channels of sulfur and the electrolyte solution in the finally formed secondary structure, thereby improving sulfur loading and material transport in the electrolyte solution.

In an embodiment of the present disclosure, according to the foregoing description, not only the diameter and length of the carbon nanotubes that constitute the secondary structure not only a ratio of diameter and length may be important. In a specific embodiment of the present disclosure, the ratio of diameter and length of the carbon nanotubes may be 1: 1 to 1:30, specifically 1:3 to 1:25, and more specifically 1:5 to 1:20.

Hereinafter, a method of manufacturing the secondary structure by agglomeration of the carbon nanotubes will be described.

The method for manufacturing the secondary structure according to another aspect of the present disclosure comprises steps of (S10) obtaining the macro entangled carbon nanotubes from the carbon nanotubes; and (S20) obtaining the secondary structure having modified structure from the macro entangled carbon nanotubes. In this instance, the secondary structure is the above-described secondary structure, and has the flower-like structure comprising the spherical core and at least one amorphous flake on the surface of the core.

In an embodiment of the present disclosure, the specific surface area of the secondary structure may be 50 m²/g to 1,000 m²/g as described above. The secondary structure has the above-described properties.

To obtain the secondary structure as described above, the method starts with the step (S10) of obtaining the macro entangled carbon nanotubes by granulation of the carbon nanotubes as primary particles.

In an embodiment of the present disclosure, the step (S10) may comprise a process of preparing the dispersion of carbon nanotubes, and specifically, a process of spray drying the dispersion of carbon nanotubes.

In the present disclosure, a dispersion medium for preparing the dispersion of carbon nanotubes is referred to as a first dispersion medium to distinguish it from a dispersion medium in the step (S20) as described below. The first dispersion medium may comprise, for example, at least one of water, alcohol, benzene, toluene, pyridine, acetone, tetrahydrofuran (THF) or dimethylformamide (DMF), but is not limited thereto.

In an embodiment of the present disclosure, to improve the dispersion of the carbon nanotubes, the dispersion may further comprise a known dispersant. The dispersant may be, for example, polystyrene sulfonate, polyacrylic acid, polyvinylpyrrolidone, polyvinylalcohol, carboxymethyl cellulose, polyethylene oxide, polyvinyl butyral, ethyl cellulose or a mixture thereof, but is not limited thereto. The dispersant may not remain on the secondary structure obtained by a carbonization process in the subsequent step for obtaining the secondary structure.

In an embodiment of the present disclosure, the carbon nanotubes may be included in an amount of 0.5 to 5 weight% based on the total weight of the dispersion of carbon nanotubes. Additionally, when the dispersion further comprises the dispersant, a weight ratio of the carbon nanotubes and the dispersant may be, for example, 1:10 to 1:20, but the present disclosure is not limited thereto.

In an embodiment of the present disclosure, the step (S10) may comprise spray-drying to form the macro secondary structure by agglomeration and granulation of the carbon nanotubes. The spray-drying method may be performed by feeding the dispersion of carbon nanotubes into a sprayer to form droplets by spraying, and drying the droplets. In this instance, the spray-dryer may comprise the sprayer (a droplet generator), a reactor and a collector, but the present disclosure is not limited thereto.

In an embodiment of the present disclosure, the spray-drying in the step (S10) may use, for example, spraying at room temperature and atmospheric pressure, pressure spraying or electrospraying, and the present disclosure is not limited thereto. For example, the pressure spraying is a process that pressure sprays the dispersion through a pressure sprayer to form droplets, and creates particles through a diffusion dryer. Additionally, the electrospraying is a process that forms doplets through an electrospray nozzle using a high pressure generator, and creates particles through a diffusion dryer.

In an embodiment of the present disclosure, to use short carbon nanotubes by chopping the existing carbon nanotubes, the step (S10) may use chopped carbon nanotubes. To this end, the method may further comprise chopping the carbon nanotubes before the step (S10), and in the step (S10), the chopped carbon nanotubes may be used as primary particles.

In an embodiment of the present disclosure, the chopping of the carbon nanotubes may be, for example, performed by ball-milling.

In an embodiment of the present disclosure, the chopped carbon nanotubes may be, for example, 50 to 500 nm in diameter, and 0.1 to 5 *µ*m in length. Additionally, a ratio of diameter and length of the chopped carbon nanotubes may be, for example, 1: 1 to 1:30.

Since the macro secondary structure obtained through the step (S10) has larger particle size than the carbon composite as the finally formed secondary structure, it is referred to as macro entangled carbon nanotubes.

In an embodiment of the present disclosure, the macro entangled carbon nanotubes (CNT) which are agglomerates of carbon nanotubes, have high roundness, high specific surface area and high porosity advantages.

In an embodiment of the present disclosure, the roundness of the macro entangled carbon nanotubes may be, for example, 0.5 to 0.99, specifically 0.6 to 0.95, and more specifically 0.7 to 0.9. The roundness of the macro entangled carbon nanotubes may be measured by the method described above in the carbon composite.

In an embodiment of the present disclosure, the macro entangled carbon nanotubes may have, for example, the average particle size (D₅₀) of 20 to 200 *µ*m, 20 to 150 *µ*m, 20 to 100 *µ*m, 20 to 50 *µ*m, 20 to 40 *µ*m, specifically 25 to 35 *µ*m. In an embodiment of the present disclosure, to realize lithium-sulfur batteries with high energy density, high loading positive electrodes are needed, and it may be preferred to increase the particle size of the sulfur-carbon composite to reduce the amounts of a binder and a conductive material. In this aspect, the size of the finally formed porous carbon material (i.e., the secondary structure of carbon nanotubes) may be important. The macro entangled carbon nanotubes as an intermediate structure for forming the secondary structure of carbon nanotubes may be an entangled structure of short carbon nanotubes in the shape of a nest. The size of the macro entangled carbon nanotubes may be measured by the method described above in the secondary structure.

In an embodiment of the present disclosure, the porosity of the macro entangled carbon nanotubes may be, for example, 60 to 90 volume%, specifically 65 to 88 volume%, and more specifically 70 to 85 volume%. The porosity may be measured by ISO 15901:2019 method known in the corresponding technical field. When the porosity of the macro entangled carbon nanotubes is in the above-described range, it may be possible to improve the material transport in the finally formed carbon composite, but the present disclosure is not limited thereto.

In an embodiment of the present disclosure, the specific surface area of the macro entangled carbon nanotubes may be, for example, 200 to 400 m²/g, specifically 210 to 350 m²/g, and more specifically 250 to 300 m²/g. The specific surface area of the macro entangled carbon nanotubes may be measured by the method described above in the secondary structure.

In an embodiment of the present disclosure, the macro entangled carbon nanotubes have high specific surface area, high roundness and high porosity, but may not have sufficient ion diffusion channels when loading the sulfur containing compound as the active material and used in the electrode. Accordingly, the present disclosure uses, as the porous carbon material, the secondary structure obtained by modifying the particle shape of the obtained macro entangled carbon nanotubes.

To this end, the step (S20) is the step of obtaining the secondary structure having modified structure from the obtained macro entangled carbon nanotubes.

In an embodiment of the present disclosure, the step (S20) may comprise a process of obtaining a dispersion of the obtained macro entangled carbon nanotubes in a dispersion medium (a second dispersion medium), and spray-drying the dispersion. In this instance, the dispersion may further comprise a dispersant, and the dispersing medium and the dispersant are the same as those described above.

In an embodiment of the present disclosure, the macro entangled carbon nanotubes may be included in an amount of 0.1 to 5 weight%, 0.1 to 2 weight% or 0.5 to 1 weight% based on the total weight of the dispersion of macro entangled carbon nanotubes. When the weight of the macro entangled carbon nanotubes is in the above-described range, it may be possible to improve the particle size and particle size uniformity of the resulting secondary structure, but the present disclosure is not limited thereto.

In an embodiment of the present disclosure, for details about the spray-drying method, reference is made to the foregoing description.

In an embodiment of the present disclosure, the step (S20) may further comprise carbonization after the spray-drying. For example, the carbonization may be performed by heating the particles formed by the spray-drying under an inert gas atmosphere. The carbonization may be, for example, performed at 500°C to 1,200°C, specifically 500°C to 1,000°C, 500°C to 800°C for 30 minutes to 5 hours, or 1 hour to 2 hours.

The secondary structure obtained by the above-described method is agglomerates of carbon nanotubes described above, and has the flower-like structure comprising the spherical core and at least one amorphous flake on the surface of the core.

According to another aspect of the present disclosure, there is provided the sulfur-carbon composite in which the secondary structure of carbon nanotubes is used as the host for loading the sulfur containing compound.

The sulfur-carbon composite comprises the above-described secondary structure; and the sulfur containing compound loaded in at least a portion of the pores of the secondary structure and the outer surface of the secondary structure.

The sulfur containing compound is not limited to a particular type, and may include any type so long as it may be used as the positive electrode active material in lithium-sulfur secondary batteries. For example, the sulfur containing compound may be inorganic sulfur (S₈), lithium polysulfide (Li₂Sn, 1≤n≤8), carbon sulfur polymer (C₂Sₓ)ₘ, 2.5≤x≤50, 2≤m) or a mixture thereof, but is not limited thereto.

The sulfur containing compound may be included in the sulfur-carbon composite by physical adsorption onto the secondary structure, or by chemical bonding such as covalent bond, van deer Waals bond, etc. between sulfur and carbon in the secondary structure.

In an embodiment of the present disclosure, a weight ratio of the secondary structure and the sulfur containing compound in the sulfur-carbon composite may be, for example, 1:99 to 99:1, specifically 10:90 to 90:10, 10:90 to 40:60, 10:90 to 50:50, 10:90 to 25:75, 10:90 to 30:70, 15:85 to 30:70, 15:85 to 25:75 or 10:90 to 15:85. When the weight ratio of the secondary structure and the sulfur containing compound in the sulfur-carbon composite is in the above-described range, since the sulfur containing compound is included in a large amount, it may be possible to increase the dynamic activity of the sulfur-carbon composite and improve conductivity by the carbon composite, but the present disclosure is not limited thereto.

Since the sulfur-carbon composite of the present disclosure comprises the carbon composite having high specific surface area and sufficient ion diffusion channels through the plurality of internal pores, it may be possible to enhance sulfur loading and provide a plurality of active sites for oxidation/reduction reaction of sulfur, thereby improving battery efficiency and energy density when used in positive electrodes of lithium-sulfur batteries, but the mechanism of the present disclosure is not limited thereto.

According to another aspect of the present disclosure, there is provided an electrode comprising the secondary structure of carbon nanotubes.

In an embodiment of the present disclosure, the secondary structure of carbon nanotubes may be included as the conductive additive in an electrode active material layer of the electrode to improve the electrochemical performance of the electrode, but the present disclosure is not limited thereto.

In an embodiment of the present disclosure, the electrode may have a structure comprising a current collector, and the electrode active material layer on at least one surface of the current collector. Alternatively, the electrode may be a current collector free electrode.

According to another aspect of the present disclosure, there is provided a positive electrode comprising the sulfur-carbon composite as a positive electrode active material.

In an embodiment of the present disclosure, in addition to the positive electrode active material, the positive electrode may further comprise a binder, a conductive material and an additive, if necessary. In this instance, the binder, the conductive material and the additive may include those of common types, and their description is omitted.

In another embodiment of the present disclosure, the positive electrode may comprise a positive electrode current collector, and a positive electrode active material layer on one or two surfaces of the current collector, and comprising the positive electrode active material and the binder, but the structure of the positive electrode is not limited thereto. The positive electrode current collector is not limited to a particular type and may include any type so long as it has high conductivity without causing any chemical change to the corresponding battery.

In an embodiment of the present disclosure, the positive electrode comprising the sulfur-carbon composite may exhibit high sulfur loading and activity in oxidation/reduction reaction of sulfur, but the effect of the present disclosure is not limited thereto.

According to another aspect of the present disclosure, there is provided an electrochemical device comprising a positive electrode, a negative electrode, a separator interposed between the positive electrode and the negative electrode and an electrolyte solution, wherein at least one of the positive electrode or the negative electrode comprises the secondary structure of carbon nanotubes.

According to another aspect of the present disclosure, there is provided an electrochemical device comprising a positive electrode, a negative electrode, a separator interposed between the positive electrode and the negative electrode and an electrolyte solution, wherein the positive electrode comprises the sulfur-carbon composite as the active material.

According to an embodiment of the present disclosure, the electrochemical device may be a lithium-sulfur battery.

In an embodiment of the present disclosure, the negative electrode, the separator and the electrolyte solution are not limited to particular types and may include any type so long as it may be used in the electrochemical device, especially the lithium-sulfur battery without hindering the purpose of the present disclosure, and a detailed description of the type is omitted.

In an embodiment of the present disclosure, the electrochemical device is not limited to a particular shape and may be, for example, coin-type, cylindrical, pouch-type or prismatic in shape. Additionally, the electrochemical device may be used in a battery cell used as a power source of small devices and may be also used as a unit battery in a medium- and large-scale battery module comprising a plurality of battery cells, and is not limited to a particular type of usage.

In an embodiment of the present disclosure, the lithium-sulfur battery using the positive electrode comprising the sulfur-carbon composite may have high energy density, but the effect of the present disclosure is not limited thereto.

In an embodiment of the present disclosure, the lithium-sulfur battery may have significant improvement in energy density by increasing sulfur loading in the electrode and reducing the amount of electrolyte solutions, but the effect of the present disclosure is not limited thereto.

Hereinafter, the lithium-sulfur battery using the carbon composite according to an embodiment of the present disclosure will be described in detail through examples. However, the following examples are provided to describe the present disclosure by way of illustration, and the scope of the present disclosure is not limited thereto.

### [Preparation of secondary structure using carbon nanotubes]

### Comparative example 1

### Preparation of macro entangled carbon nanotubes

The carbon nanotubes (manufacturer: Pyrograf Products, Inc.) having the diameter of 150 nm on average were ball-milled for 6 hours using zirconium oxide (ZrO₂) balls to prepare chopped carbon nanotubes having the length of 2 *µ*m on average. The chopped carbon nanotubes were added to a 1 wt% polyacrylic acid solution (polyacrylic acid weight average molecular weight (Mw): 450,000 g/mol) and dispersed. Here, the amount of the carbon nanotubes was adjusted so that a weight ratio of the carbon nanotubes and the polyacrylic acid solution was 1: 10.

The dispersion of carbon nanotubes was spray-dried (conditions: Buchi B-290 mini spray-dryer, Inlet temperature 180°C, aspirator 95%, feeding rate 12) to form particles to obtain macro entangled carbon nanotubes. The obtained macro entangled carbon nanotubes had the average particle size (D₅₀) of 30 *µ*m, roundness of 0.8, and specific surface area of 250 m²/g.

FIG. 1 is an SEM image of the secondary structure according to comparative example 1. Referring to FIG. 1, it was confirmed that the secondary structure was secondary particles produced by agglomeration of carbon nanotubes and formed into spherical shape.

### Example 1

### Preparation of secondary structure

The macro entangled carbon nanotubes (secondary particles) obtained in comparative example 1 were added to a 18 wt% polystyrene sulfonate solution, predispersed and diluted 5 fold with distilled water to prepare a dispersion. A weight ratio of macro entangled carbon nanotubes:polystyrene sulfonate:distilled water in the prepared dispersion was 18:50:2000.

The prepared dispersion of macro entangled carbon nanotubes was pretreated (HSH (8 k/90 min)) followed by 90 min tip sonication and fed into a sprayer to carry out spray-drying (conditions: Buchi B-290 mini spray-dryer, Inlet temperature 200°C, aspirator 95%, N₂ flow 50, feeding rate 15) to form particles, and subsequently carbonized by heating at 600°C for 2 hours to obtain a secondary structure of carbon nanotubes. The obtained secondary structure had the average particle size (D₅₀) of 15 *µ*m, and specific surface area of 160 m²/g.

FIG. 2 is an SEM image of the secondary structure according to example 1. Referring to FIG. 2, it was confirmed that the secondary structure has a flower-like shape comprising a spherical core and a plurality of amorphous flakes, specifically platy flakes, on the surface of the spherical core.

### [Preparation of lithium-sulfur coin cell]

### Example 2

### Preparation of sulfur-carbon composite

The secondary structure of example 1 as a porous carbon material was mixed with sulfur (S₈) at a weight ratio of 25:75, followed by reaction at 155°C for 35 minutes to prepare a sulfur-carbon composite in which sulfur was loaded in the pores in the secondary structure and the surface of the secondary structure.

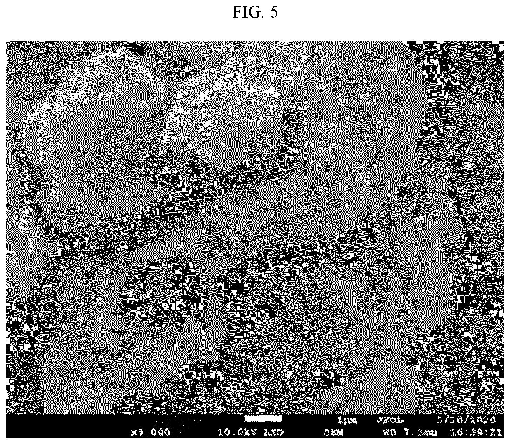

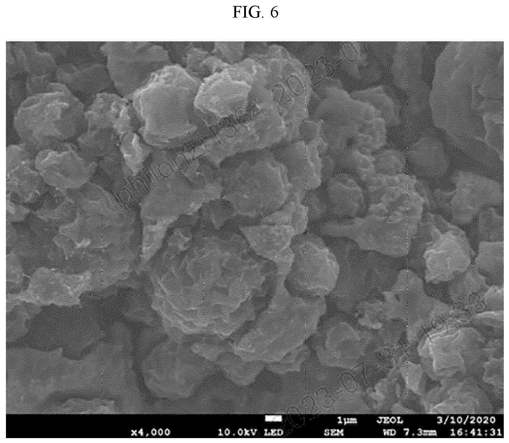

FIGS. 5 and 6 are SEM images of the sulfur-carbon composite prepared according to example 2 immediately after the preparation. FIG. 5 is an image at 9,000x magnification, and FIG. 6 is an image at 4,000x magnification.

### Preparation of positive electrode

90 weight% of the prepared sulfur-carbon composite, 5 weight% of denka black as a conductive material and 5 weight% of styrene-butadiene rubber/carboxymethylcellulose (SBR:CMC weight ratio=7:3) as a binder were mixed to prepare a positive electrode slurry composition.

The prepared positive electrode slurry composition was applied to a 20 *µ*m thick aluminum foil, coated to 150 *µ*m thickness using a blade coater and dried in a 50°C oven to prepare a positive electrode (loading amount 4 mAh/cm²).

### Preparation of lithium-sulfur coin cell

The prepared positive electrode and a lithium metal (thickness 200 *µ*m) as a negative electrode opposite the positive electrode were placed with a separator (polyethylene thickness 20 *µ*m, porosity 45 vol%) interposed between them, and an ether-based electrolyte solution containing 1.0 M LiFSI and 2 wt% LiNO₃ was injected to prepare a lithium-sulfur battery.

### Comparative example 2

A lithium-sulfur coin cell was prepared by the same method as example 2 except that the secondary structure of comparative example 1 was used as the porous carbon material.

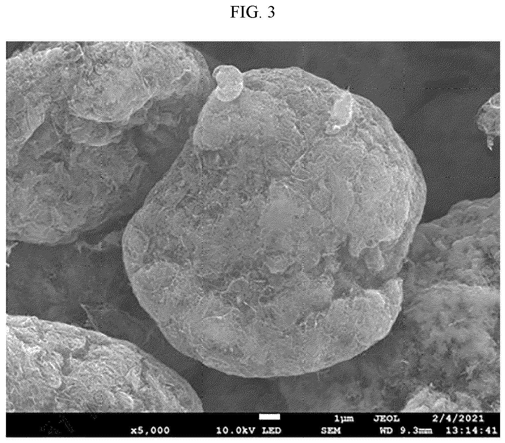

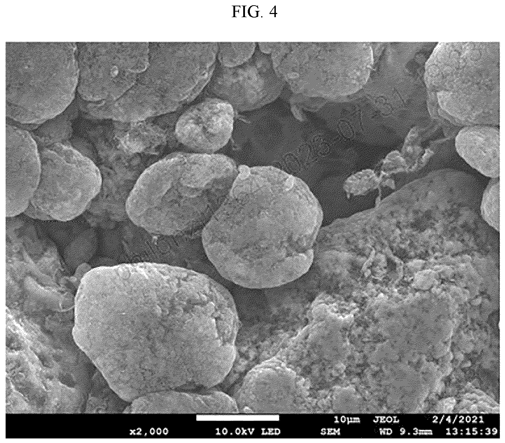

FIGS. 3 and 4 are SEM images of the sulfur-carbon composite prepared according to comparative example 2 immediately after the preparation. FIG. 3 is an image at 5,000x magnification, and FIG. 4 is an image at 2,000x magnification.

### [Performance evaluation of sulfur-carbon composite]

Through the SEM images of the sulfur-carbon composites in FIGS. 3 and 4 (comparative example 2) vs FIGS. 5 and 6 (example 2), it was confirmed that the sulfur-carbon composite according to the present disclosure may form a better pore structure for ion/electron transport. Together with the following experimental results, it was inferred that the flower-like shape comprising amorphous flake(s) may make a performance difference in the high rate range.

### [Performance evaluation of lithium-sulfur coin cell]

### Capacity evaluation

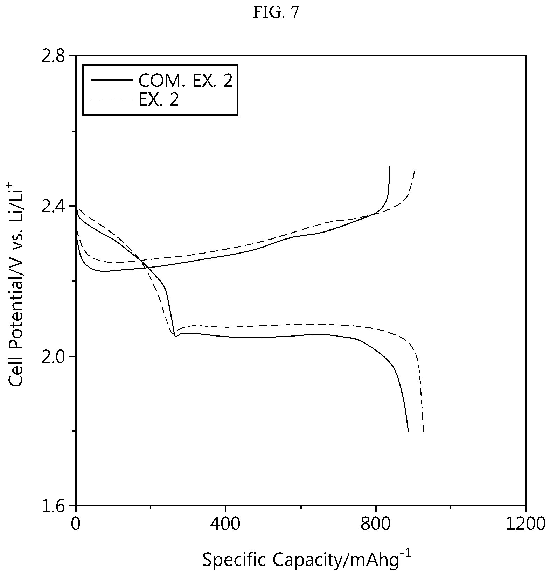

The lithium-sulfur batteries of example 2 and comparative example 2 were charged and discharged for three cycles with the current density of 0.1 C in the voltage range between 1.7 and 3.0 V (vs. Li/Li⁺) at 25°C using a charge·discharge measuring instrument (P&E Solutions) to evaluate the capacity characteristics of the batteries. The battery capacity evaluation results are shown in FIG. 7.

According to FIG. 7, it was confirmed that comparative example 2 ensured high capacity at 0.1 C but was poor in terms of overvoltage occurrence compared to example 2.

### Life evaluation

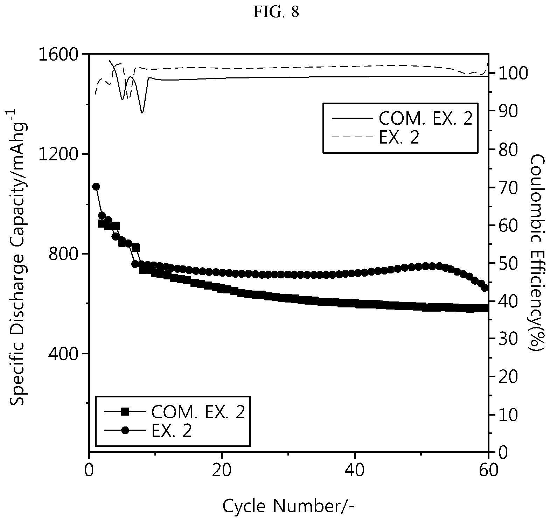

The lithium-sulfur batteries of example 2 and comparative example 2 were charged and discharged for six cycles with the current density of 0.1C at 25°C using a charge·discharge measuring instrument (P&E Solutions), and then charged with the current density of 0.2C and discharged with the current density of 0.3C to evaluate the life characteristics of the batteries. The battery life evaluation results are shown in FIG. 8.

According to FIG. 8, it was confirmed that high rate capacity of example 2 was much higher than comparative example 2 in 0.3C high rate discharge conditions.

## Claims

1. A secondary structure, comprising:
agglomerates of carbon nanotubes,
wherein the secondary structure has a flower-like structure comprising a spherical core and at least one amorphous flake on a surface of the core.

2. The secondary structure according to claim 1, wherein a specific surface area of the secondary structure is 50 m²/g to 1,000 m²/g.

3. The secondary structure according to claim 1, wherein an average particle size (D₅₀) of the secondary structure is 1 *µ*m to 100 *µ*m.

4. The secondary structure according to claim 1, wherein the secondary structure has the flower-like structure comprising the spherical core having an average particle size (D₅₀) of 10 to 20 *µ*m and the at least one amorphous flake having an average particle size (D₅₀) of 1 to 5 *µ*m on the surface of the core.

5. The secondary structure according to claim 1, wherein a roundness of the secondary structure is 0.5 to 0.99.

6. The secondary structure according to claim 1, wherein a total pore volume in the secondary structure is 0.5 to 5 cm³/g.

7. The secondary structure according to claim 1, wherein the carbon nanotubes have a diameter of 50 to 500 nm, and a length of 0.1 to 5 *µ*m.

8. The secondary structure according to claim 1, wherein a ratio of diameter and length of the carbon nanotubes is 1:1 to 1:30.

9. A method for manufacturing a secondary structure, comprising steps of:
(S10) agglomerating carbon nanotubes to obtain macro entangled carbon nanotubes; and
(S20) obtaining a secondary structure having a modified structure from the macro entangled carbon nanotubes,
wherein the secondary structure has a flower-like structure comprising a spherical core and at least one amorphous flake on a surface of the core.

10. The method for manufacturing the secondary structure according to claim 9, wherein a specific surface area of the secondary structure is 50 m²/g to 1,000 m²/g.

11. The method for manufacturing the secondary structure according to claim 9, wherein the (S10) step comprises spray-drying a dispersion of the carbon nanotubes in a first dispersion medium.

12. The method for manufacturing the secondary structure according to claim 9, wherein the (S20) step comprises spray-drying a dispersion of the macro entangled carbon nanotubes in a second dispersion medium.

13. The method for manufacturing the secondary structure according to claim 11 or 12, wherein the first dispersion medium or the second dispersion medium comprises at least one of water, alcohol, benzene, toluene, pyridine, acetone, tetrahydrofuran (THF) or dimethylformamide (DMF).

14. The method for manufacturing the secondary structure according to claim 12, further comprising:
after the spray-drying,
a carbonization step.

15. The method for manufacturing the secondary structure according to claim 14, wherein the carbonization is performed at a temperature of 500°C to 1,200°C.

16. The method for manufacturing the secondary structure according to claim 9, further comprising:
before the (S10) step,
chopping the carbon nanotubes,
wherein the (S10) step comprises obtaining the macro entangled carbon nanotubes from the chopped carbon nanotubes.

17. The method for manufacturing the secondary structure according to claim 9, wherein the macro entangled carbon nanotubes has a roundness of 0.5 to 0.99.

18. The method for manufacturing the secondary structure according to claim 9, wherein the macro entangled carbon nanotubes have an average particle size (D₅₀) of 20 to 200 *µ*m.

19. The method for manufacturing the secondary structure according to claim 9, wherein the macro entangled carbon nanotubes have a porosity of 60 to 90 volume%.

20. The method for manufacturing the secondary structure according to claim 9, wherein the macro entangled carbon nanotubes have a specific surface area of 200 m²/g to 400 m²/g.

21. A sulfur-carbon composite, comprising:
the secondary structure according to any one of claims 1 to 8; and
a sulfur containing compound loaded in at least a portion of pores of the secondary structure and an outer surface of the secondary structure.

22. The sulfur-carbon composite according to claim 21, wherein the sulfur containing compound comprises inorganic sulfur (S₈), lithium polysulfide (Li₂Sn, 1≤n≤8), carbon sulfur polymer (C₂Sₓ)ₘ, 2.5≤x≤50, 2≤m) or a mixture thereof.

23. The sulfur-carbon composite according to claim 21, wherein a weight ratio of the secondary structure and the sulfur containing compound is 10:90 to 40:60.

24. An electrode, comprising:
the secondary structure according to any one of claims 1 to 8 in an electrode active material layer.

25. An electrochemical device, comprising:
a positive electrode, a negative electrode, a separator interposed between the positive electrode and the negative electrode and an electrolyte solution,
wherein at least one of the positive electrode or the negative electrode comprises the secondary structure according to any one of claims 1 to 8.
